# EUROPEAN PATENT APPLICATION

(11) **EP 2 693 034 A1**
(43) Date of publication of application: **05.02.2014**
(21) Application number: 11861567.3
(22) Date of filing: 20.12.2011
(51) Int. Cl.: F02M 21/02, F02M 25/08, F02M 33/02, F02M 31/20

(54) **NON-EXPLOSIVE MIXED REFRIGERANT FOR RE-LIQUEFYING DEVICE IN SYSTEM FOR SUPPLYING FUEL TO HIGH-PRESSURE NATURAL GAS INJECTION ENGINE**

(30) Priority: 22.03.2011 KR 20110025397; 11.04.2011 KR 20110033331
(71) Applicant: Daewoo Shipbuilding & Marine Engineering Co., Ltd., Seoul 100-180 (KR)
(72) Inventor: JUNG, Seung Kyo, Busan 614-789 (KR); JUNG, Je Heon, Geoje-si Gyeongsangnam-do 656-220 (KR); CHOI, Dong Kyu, Geoje-si Gyeongsangnam-do 656-903 (KR); LEE, Jung Han, Geoje-si Gyeongsangnam-do 656-905 (KR); MOON, Young Sik, Geoje-si Gyeongsangnam-do 656-904 (KR); YU, Jin Yeol, Geoje-si Gyeongsangnam-do 656-050 (KR)
(74) Representative: Intès, Didier Gérard André
(86) International application number: PCT/KR2011/009822
(87) International publication number: WO 2012/128449

(57) **Abstract**

Provided is a nonflammable mixed refrigerant for use in a reliquefaction apparatus of a fuel supply system that compresses BOG generated in an LNG storage tank to a medium pressure, reliquefies the compressed BOG, compresses the reliquefied BOG to a high pressure, gasifies the compressed requefied BOG, and supplies the gasified BOG to a high-pressure natural gas injection engine. A nonflammable mixed refrigerant for use in a fuel supply system for a high-pressure natural gas injection engine is provided. The fuel supply system includes BOG compression unit configured to receive and compress BOG generated in a storage tank storing liquefied gas, a reliquefaction apparatus configured to receive and liquefy the BOG compressed by the BOG compression unit, a high-pressure pump configured to compress the liquefied BOG generated by the reliquefaction apparatus, and a high-pressure gasifier configured to gasify the liquefied BOG compressed by the high-pressure pump and supply the gasified BOG to the high-pressure natural gas injection engine. The nonflammable mixed refrigerant cools the BOG by heat exchange with the BOG in the reliquefaction apparatus. The nonflammable mixed refrigerant comprises a mixture of nonflammable refrigerants with different boiling points, and the boiling point of each of the nonflammable refrigerant ranges between a room temperature and a liquefaction temperature of natural gas.

## Description

### TECHNICAL FIELD

The present invention relates to a nonflammable mixed refrigerant for use in a reliquefaction apparatus of a fuel supply system that compresses boil-off gas (BOG) generated in a liquefied natural gas (LNG) storage tank to a medium pressure, reliquefies the compressed BOG, compresses the reliquefied BOG to a high pressure, gasifies the compressed requefied BOG, and supplies the gasified BOG to a high-pressure natural gas injection engine.

### BACKGROUND ART

Recently, the consumption of natural gas, such as liquefied natural gas (LNG) or liquefied petroleum gas (LPG), has been rapidly increasing throughout the world. Liquefied gas is transported in a gaseous state through onshore or offshore gas pipelines, or transported to a remote consumption place while being stored in a liquefied state inside a liquefied gas carrier. Liquefied gas, such as LNG or LPG, is obtained by cooling natural gas or petroleum gas to a cryogenic temperature (in the case of LNG, about -163°C). Since the volume of liquefied gas is considerably reduced as compared to a gaseous state, liquefied gas is very suitable for a long-distance marine transportation

A liquefied gas carrier is designed to load liquefied gas, sail across the sea, and unload the liquefied gas at an onshore consumption place. To this end, the liquefied gas carrier includes a storage tank (also called "cargo hold") that can withstand a cryogenic temperature of liquefied gas.

Examples of a marine structure provided with a storage tank capable of storing cryogenic liquefied gas may include vessels, such as a liquefied gas carrier and an LNG Regasification Vessel (LNG RV), or structures, such as an LNG Floating Storage and Regasification Unit (LNG FSRU) and an LNG Floating, Production, Storage and Offloading (LNG FPSO).

The LNG RV is a self-propelled, floatable liquefied gas carrier equipped with an LNG regasification facility, and the LNG FSRU is a marine structure that stores LNG unloaded from an LNG carrier on the sea far away from the land and, if necessary, supplies the LNG to an offshore consumption place by gasifying the LNG. The LNG FPSO is a marine structure that refines extracted LNG on the sea, stores the LNG in a storage tank after direct liquefaction, and, if necessary, transships the LNG to an LNG carrier. The term "marine structure" as used herein is a concept including vessels, such as a liquefied gas carrier and an LNG RV, and structures, such as an LNG FPSO and an LNG FSRU.

Since the liquefaction temperature of natural gas is a cryogenic temperature of - 163°C at ambient pressure, LNG is likely to be vaporized even when the temperature of LNG is slightly higher than -163°C at ambient pressure. In the case of a conventional LNG carrier, even though an LNG storage tank is thermally insulated, external heat is continuously transferred to LNG. Therefore, LNG is continuously vaporized and boil-off gas is generated within the LNG storage tank during the transportation of LNG by the LNG carrier.

The generated natural gas may increase the internal pressure of the storage tank and accelerate the flow of the natural gas due to the rocking of the vessel, causing structural problems. Therefore, it is necessary to suppress the generation of BOG.

Conventionally, in order to suppress the generation of BOG within the storage tank of the liquefied gas carrier, a method of discharging the BOG from the storage tank and burning the BOG, a method of discharging the BOG from the storage tank, reliquefying the BOG through a reliquefaction apparatus, and returning the BOG to the storage tank, a method of using the BOG as fuel for a vessel's propulsion engine, and a method of suppressing the generation of BOG by maintaining an internal pressure of a storage tank at a high level have been used solely or in combination.

In the case of a conventional floating structure equipped with a BOG reliquefaction apparatus, BOG inside a storage tank is discharged from the storage tank and then reliquefied through a reliquefaction apparatus in order to maintain a pressure of the storage tank at an appropriate level. In this case, before a reliquefaction process, the BOG is compressed to a low pressure of about 4 to 8 bara and then supplied to the reliquefaction apparatus. The compressed BOG is reliquefied through heat exchange with nitrogen cooled to a cryogenic temperature in the reliquefaction apparatus including a nitrogen refrigeration cycle, and the liquefied BOG is returned to the storage tank.

BOG may be compressed to a high pressure in order to increase the BOG reliquefaction efficiency. However, the LNG stored in the storage tank is maintained at an ambient pressure state, and therefore, if a pressure of the liquefied BOG is excessively high, flash gas may be generated when the BOG is returned to the storage tank. Consequently, the BOG needs to be compressed to the above-mentioned low pressure of about 4 to 8 bara, in spite of low reliquefaction efficiency.

Conventionally, a nitrogen refrigeration cycle and a mixed refrigerant are used for reliquefaction of BOG. Since the nitrogen refrigeration cycle uses nitrogen gas (N₂) as a refrigerant, the liquefaction efficiency is low. Also, the mixed refrigerant cycle uses a refrigerant mixed with nitrogen and hydrocarbon gases as a refrigerant, the stability is low.

More specifically, a conventional offshore LNG reliquefaction apparatus for a vessel or an offshore plant reliquefies BOG by implementing a turbo-expander-type nitrogen reverse Brayton cycle. A conventional onshore LNG liquefaction plant liquefies natural gas by implementing a Joule-Thomson refrigeration cycle using a mixed refrigerant. The nitrogen reverse Brayton cycle used for the offshore LNG liquefaction apparatus is relatively simple in the configuration of the apparatus and thus is advantageous to a limited vessel or offshore plant, but has low efficiency. The mixed-refrigerant Joule-Thomson refrigeration cycle used for the onshore LNG liquefaction plant has relatively high efficiency but is complicated in the configuration of the apparatus because a separator needs to be used for separating a mixed refrigerant when a gaseous state and a liquid state coexist due to the feature of the mixed refrigerant.

Moreover, in the case of a marine structure equipped with a storage tank configured to store liquefied gas such as LNG, there is a need for extensive research and development of methods for efficiently processing BOG continuously generated in a storage tank and suppressing the generation of flash gas.

### DISCLOSURE

### Technical Problem

The present invention is to provide a nonflammable mixed refrigerant for improving the reliquefaction efficiency of a reliquefaction apparatus in a fuel supply system that compresses boil-off gas (BOG) generated in a liquefied natural gas (LNG) storage tank to a medium pressure, reliquefies the compressed BOG, compresses the reliquefied BOG to a high pressure, gasifies the compressed requefied BOG, and supplies the gasified BOG to a high-pressure natural gas injection engine.

### Technical Solution

According to an embodiment of the present invention, there is provided a nonflammable mixed refrigerant for use in a fuel supply system for a high-pressure natural gas injection engine, the fuel supply system including a boil-off gas (BOG) compression unit configured to receive and compress BOG generated in a storage tank storing liquefied gas, a reliquefaction apparatus configured to receive and liquefy the BOG compressed by the BOG compression unit, a high-pressure pump configured to compress the liquefied BOG generated by the reliquefaction apparatus, and a high-pressure gasifier configured to gasify the liquefied BOG compressed by the high-pressure pump and supply the gasified BOG to the high-pressure natural gas injection engine, wherein the nonflammable mixed refrigerant cooling the BOG by heat exchange with the BOG in the reliquefaction apparatus comprises a mixture of nonflammable refrigerants with different boiling points, and the boiling point of each of the nonflammable refrigerant ranges between a room temperature and a liquefaction temperature of natural gas.

Wherein when group I includes argon (Ar), group II includes R14, group III includes R23, R116, and R41, group IV includes R32, R410A, R410B, R125, R143a, R507, R407B, R404A, R407A, R407C, R407E, R407D, R161, R218, R134a, R152a, and R227ea, and group V includes R236fa and R245fa, the nonflammable mixed refrigerant may include a mixture of one or more refrigerants selected from the group I, one or more refrigerants selected from the group II, one or more refrigerants selected from the group III, one or more refrigerants selected from the group IV, and one or more refrigerants selected from the group V.

A composition ratio of the nonflammable refrigerants may be determined to constantly maintain a temperature difference between a high-temperature fluid and a low-temperature fluid in a heat exchanger performing heat exchange between the nonflammable mixed refrigerant and the BOG.

The nonflammable mixed refrigerant may include a mixture of Ar, R14, R23, R410a, and R245fa.

The nonflammable mixed refrigerant may have a freezing point of a temperature that does not cause the BOG to be frozen even when the BOG is generated in the storage tank, discharged from the storage tank, compressed to a pressure of about 12 to 45 bara in the BOG compression unit, and then reliquefied by heat exchange with the nonflammable mixed refrigerant.

According to another embodiment of the present invention, a nonflammable mixed refrigerant used to liquefy natural gas is characterized in that the nonflammable mixed refrigerant reliquefying boil-off gas (BOG) by heat exchange with the BOG that is generated in and discharged from a liquefied natural gas (LNG) storage tank, and the nonflammable mixed refrigerant has a freezing point of a temperature that does not cause the BOG to be frozen even when the BOG is generated in the LNG storage tank, discharged from the LNG storage tank, compressed to a pressure of about 12 to 45 bara in a compression unit, and then reliquefied by heat exchange with the nonflammable mixed refrigerant.

According to another embodiment of the present invention, a nonflammable mixed refrigerant used to liquefy natural gas is characterized in that the nonflammable mixed refrigerant reliquefying natural gas by heat exchange with the natural gas in a heat exchanger comprises a mixture of nonflammable refrigerants with different boiling points, and the boiling point of each of the nonflammable refrigerant ranges between a room temperature and a liquefaction temperature of natural gas.

### Advantageous Effects

The present invention may provide a nonflammable mixed refrigerant for improving the reliquefaction efficiency of a reliquefaction apparatus in a fuel supply system that compresses boil-off gas (BOG) generated in a liquefied natural gas (LNG) storage tank to a medium pressure, reliquefies the compressed BOG, compresses the reliquefied BOG to a high pressure, gasifies the compressed requefied BOG, and supplies the gasified BOG to a high-pressure natural gas injection engine.

According to the fuel supply system operating method for the high-pressure natural gas injection engine according to the present invention, fuel can be efficiently supplied to the high-pressure natural gas injection engine, and the energy consumption of the reliquefaction apparatus can be minimized.

As opposed to the related art in which the BOG is compressed to a low pressure of about 4 to 8 bara, the fuel supply system using a nonflammable mixed refrigerant according to the present invention compresses the BOG to a medium pressure of about 12 to 45 bara and then reliquefied. As the pressure of the BOG increases, the liquefaction energy decreases. Therefore, the liquefaction energy consumed in reliquefaction may be reduced.

Also, in the present invention, a nonflammable mixed refrigerant is used as a refrigerant of a reliquefaction apparatus for the BOG reliquefaction. Therefore, the fuel supply method according to the present invention is more efficient than a conventional nitrogen refrigeration cycle, and can reliquefy the BOG more safely than a conventional mixed refrigerant cycle.

Also, in the fuel supply system using the nonflammable mixed refrigerant according to the present invention, the high-pressure natural gas injection engine according to the present invention, since the pressure of the BOG in the BOG reliquefaction is a medium pressure higher than that of the related art, the liquefying point of the BOG increases. Therefore, thermal stress applied to a heat exchanger for reliquefaction is reduced, and a heat duty of a high-pressure gasifier is reduced, leading to a reduction in the size of the apparatus.

### DESCRIPTION OF DRAWINGS

FIG. 1 is a configuration diagram illustrating a fuel supply system for a high-pressure natural gas injection engine according to a first embodiment of the present invention.
FIG. 2A is a graph illustrating the freezing points and boiling points of components contained in a nonflammable mixed refrigerant according to the present invention.
FIG. 2B is a graph illustrating the freezing points and boiling points of components contained in a hydrocarbon mixed refrigerant.
FIG. 2C is a graph illustrating a liquefaction temperature of natural gas according to a compression pressure.
FIG. 3 is a graph illustrating the boiling points of components constituting a nonflammable mixed refrigerant.
FIG. 4 is graphs illustrating the comparison of power consumptions in cases where a BOG reliquefaction apparatus uses a nonflammable mixed refrigerant refrigeration cycle and a nitrogen gas refrigeration cycle.
FIG. 5 is a configuration diagram illustrating a fuel supply system for a high-pressure natural gas injection engine according to a second embodiment of the present invention.
FIG. 6 is a configuration diagram illustrating a fuel supply system for a high-pressure natural gas injection engine according to a third embodiment of the present invention.
FIG. 7 is a configuration diagram illustrating a fuel supply system for a high-pressure natural gas injection engine according to a fourth embodiment of the present invention.

### DETAILED DESCRIPTION OF EXEMPLARY EMBODIMENTS

Exemplary embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art.

The International Maritime Organization (IMO) regulates the emission of nitrogen oxides (NOₓ) and sulfur oxides (SOₓ) among exhaust gases of ships and also tries to regulate the emission of carbon dioxide (CO₂). In particular, the issue of the regulation of nitrogen oxides (NOₓ) and sulfur oxides (SOₓ) was raised by the Prevention of Marine Pollution from Ships (MARPOL) protocol in 1997. After eight long years, the protocol met effectuation requirements and entered into force in May 2005. Currently, the regulation is in force as a compulsory provision.

Therefore, in order to meet such a provision, a variety of methods have been introduced to reduce the emission of nitrogen oxides (NOₓ). As one of these methods, a high-pressure natural gas injection engine for an LNG carrier, for example, an ME-GI engine, has been developed and used.

Such an ME-GI engine may be installed in a marine structure such as an LNG carrier which transports LNG while storing the LNG in a storage tank capable of withstanding a cryogenic temperature. The term "marine structure" as used herein includes vessels, such as an LNG carrier and an LNG RV, and offshore plants, such as an LNG FPSO and an LNG FSRU. In this case, the ME-GI engine uses natural gas as fuel and requires a high pressure of about 150 to 400 bara (absolute pressure) for gas supply, depending on a load thereof.

When a reliquefaction apparatus is additionally installed, an ME-GI engine can select whether to use BOG as fuel or to use heavy fuel oil (HFO) as fuel while reliquefying BOG and transferring the liquefied BOG to a storage tank, depending on the change in gas and fuel oil prices and the intensity of regulation of exhaust gases. In particular, when passing through an area of the sea which is specially regulated, the marine structure can be fueled by simply gasifying LNG. In addition, the marine structure is considered as a next-generation environment-friendly engine and has an efficiency of up to 50%. Therefore, it is expected that the marine structure will be used as a main engine of an LNG carrier in the near future.

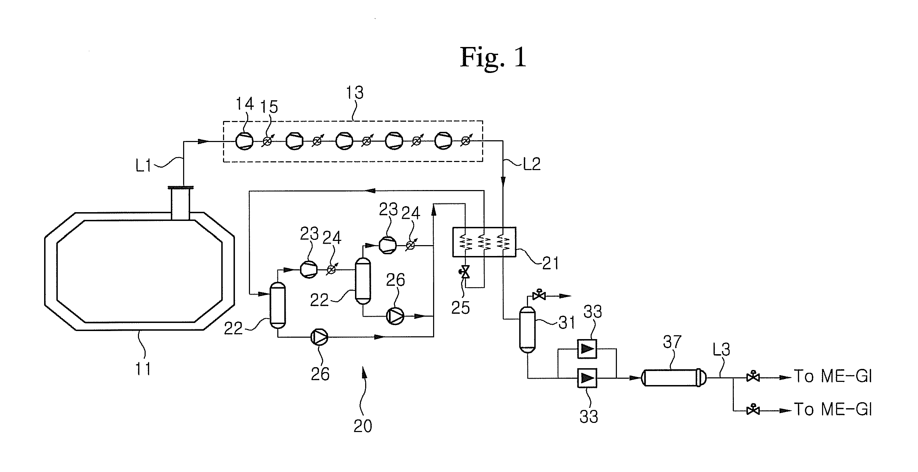

FIG. 1 is a configuration diagram illustrating a fuel supply system for a marine structure such as an LNG carrier having a high-pressure natural gas injection engine, for example, an ME-GI engine, according to a first embodiment of the present invention. FIG. 1 illustrates an example in which the fuel supply system for the high-pressure natural gas injection engine according to the present invention is applied to the LNG carrier equipped with the ME-GI engine capable of using natural gas as fuel. However, the fuel supply system for the high-pressure natural gas injection engine according to the present invention may also be applied to any type of marine structures equipped with a liquefied gas storage tank. Examples of the marine structures may include vessels, such as an LNG carrier and an LNG RV, and offshore plants, such as an LNG FPSO and an LNG FSRU.

According to the fuel supply system for the marine structure having the high-pressure natural gas injection engine according to the first embodiment of the present invention, NBOG generated in and discharged from a liquefied gas storage tank 11 is compressed to a medium pressure of about 12 to 45 bara (absolute pressure) by a BOG compression unit 13 and then supplied to a reliquefaction apparatus 20. LBOG reliquefied in the reliquefaction apparatus 20 by receiving reliquefaction energy (i.e., cold heat) is compressed to a high pressure of about 150 to 400 bara by a high-pressure pump 33 and then supplied to a high-pressure gasifier 37. Then, the LBOG is gasified by the high-pressure gasifier 37 and then supplied as fuel to the high-pressure natural gas injection engine, for example, the ME-GI engine.

In the present specification, the "high pressure" range represents a pressure of about 150 to 400 bara, which is a fuel supply pressure required by the high-pressure natural gas injection engine. The "medium pressure" range represents a pressure of about 12 to 45 bara, at which the BOG compressor 13 compresses BOG. The "low pressure" range represents a pressure of about 4 to 8 bara, at which BOG is compressed for supply to the reliquefaction apparatus in the related art.

The storage tank includes a sealing and insulating barrier to store liquefied gas such as LNG in a cryogenic state. However, the storage tank cannot completely interrupt heat transmitted from the outside. Accordingly, liquefied gas is continuously boiled off in the storage tank 11. In order to maintain the pressure of BOG in the storage tank 11, at a suitable level, the BOG is discharged through a BOG discharge line L1.

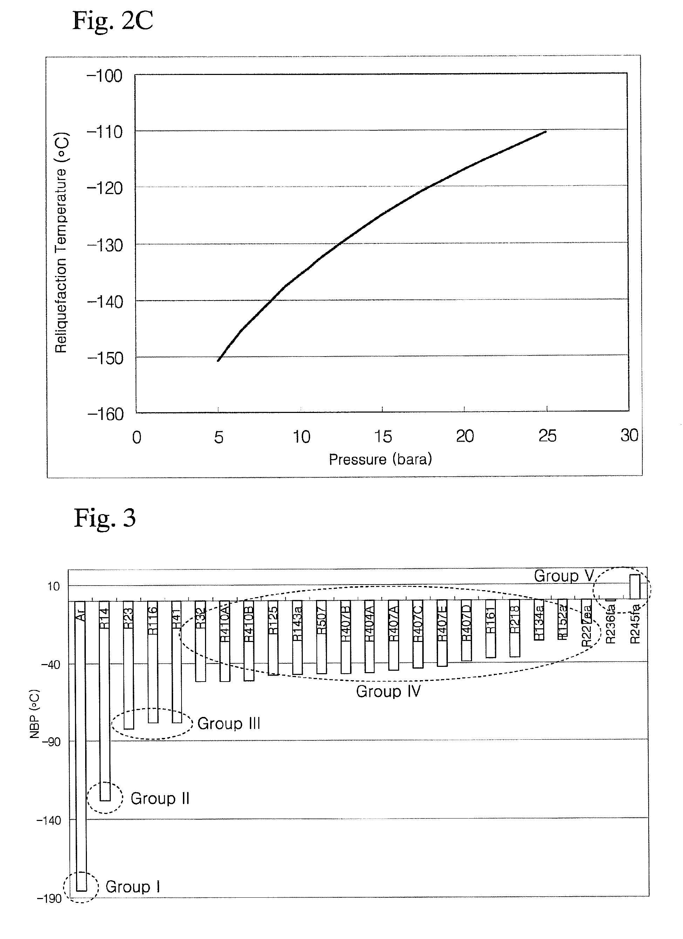

The discharged BOG is supplied to the BOG compression unit 13 through the BOG discharge line L1. The BOG compression unit 13 includes one or more BOG compressors 14 and one or more intermediate coolers 15 configured to cool the BOG, a temperature of which increases while being compressed by the BOG compressors 14. A five-stage BOG compression unit 13 including five BOG compressors 14 and five intermediate coolers 15 is exemplarily illustrated in FIG. 3A.

The BOG compressed by the BOG compression unit 13 is supplied to the reliquefaction apparatus 20 through a BOG supply line L2. The BOG supplied to the reliquefaction apparatus 20 is cooled and reliquefied by a refrigerant while passing through a cold box 21 of the reliquefaction apparatus 20. The reliquefaction apparatus 20 may have any configuration as long as the reliquefaction apparatus 20 can liquefy BOG generated from the liquefied gas such as LNG.

The reliquefaction apparatus 20 exemplarily illustrated in FIG. 1 includes a cold box 21 configured to reliquefy BOG through heat exchange with a refrigerant, one or more gas-liquid refrigerant separators 22 configured to separate a refrigerant, which is heated and partially gasified by the cold box 21, into a gaseous refrigerant and a liquid refrigerant, one or more refrigerant compressors 23 configured to compress the gaseous refrigerant separated by the gas-liquid refrigerant separators 22, a refrigerant cooler 24 configured to cool the refrigerant compressed by the refrigerant compressors 23, a refrigerant expansion valve 25 configured to drop the temperature of the refrigerant by expanding the refrigerant compressed by the refrigerant compressors 23 and cooled by the refrigerant cooler 24, and a refrigerant pump 26 configured to supply the liquid refrigerant separated by the gas-liquid refrigerant separators 22 to the refrigerant expansion valve 25.

The refrigerant supplied to the refrigerant expansion valve 25 through the refrigerant pump 26 may be mixed with the refrigerant supplied to the refrigerant expansion valve 25 after passing through the refrigerant cooler 24 in an upstream side of the refrigerant expansion valve 25.

Meanwhile, the refrigerant supplied to the refrigerant expansion valve 25 may exchange heat with the refrigerant that passes through the cold box 21 before expansion and has a cryogenic state after expansion.

In addition, the refrigerant cooled by the refrigerant cooler 24 may be supplied to another gas-liquid refrigerant separator and separated into a gaseous refrigerant and a liquid refrigerant. To this end, although the liquefaction apparatus 20 including two gas-liquid refrigerant separators 22, two refrigerant compressors 23, two refrigerant coolers, and two refrigerant pumps 26 is exemplarily illustrated in FIG. 3A, the present invention is not limited thereto. The number of the respective components included in the liquefaction apparatus 20 may be increased or decreased, depending on a design thereof.

According to the present invention, as the refrigerant circulating within the reliquefaction apparatus 20, a nonflammable mixed refrigerant including R14 may be used, as opposed to the related art. The nonflammable mixed refrigerant prepared by mixing a plurality of nonflammable refrigerants has a mixture composition ratio such that the refrigerant is not condensed even at a liquefaction temperature when BOG compressed to a medium pressure is reliquefied.

A refrigeration cycle using a phase change of the mixed refrigerant has higher efficiency than a nitrogen refrigeration cycle using only nitrogen as a refrigerant. A conventional mixed refrigerant has a safety problem because a flammable refrigerant is mixed therein. However, the nonflammable mixed refrigerant according to the present invention has high safety because the nonflammable mixed refrigerant is prepared by mixing nonflammable refrigerants.

The nonflammable mixed refrigerant according to the present invention may make it possible to apply a mixed-refrigerant Joule-Thomson refrigeration cycle to an offshore LNG reliquefaction apparatus. Meanwhile, it is known that the mixed refrigerant is used in a conventional onshore LNG liquefaction plant. Since such a mixed refrigerant is an explosive hydrocarbon (HC) mixed refrigerant, it has been difficult to treat the mixed refrigerant. However, the nonflammable mixed refrigerant according to the present invention is non-explosive because the nonflammable mixed refrigerant includes argon, a hydrofluorocarbon (HFC) refrigerant, and a fluorocarbon (FC) refrigerant.

As the HFC/FC refrigerants, refrigerants listed in Table 1 below may be used. In Table 1 below, argon is also added.

**Table 1**

| Refrigerant No. | Chemical Formula | Mole. weight | Boiling Point (NBP)(°C) |
|---|---|---|---|
| Ar | Ar | 39.95 | -185.9 |
| R14 | CF4 | 88 | -128.1 |
| R23 | CHF3 | 70.01 | -82.1 |
| R116 | CF3CF3 | 138.01 | -78.2 |
| R41 | CH3F | 34.03 | -78.1 |
| R32 | CH2F2 | 52.02 | -51.7 |
| R125 | CHF2CF3 | 120.02 | -48.1 |
| R143a | CH3CF3 | 84.04 | -47.2 |
| R161 | CH3CHF2 | 48.06 | -37.1 |
| R218 | CF3CF2CF3 | 188.02 | -36.6 |
| R134a | CH2FCF3 | 102.03 | -26.1 |
| R152a | CH3CHF2 | 66.05 | -24 |
| R227ea | CF3CHFCF3 | 170.03 | -15.6 |
| R236fa | CF3CH2CF3 | 152.04 | -1.4 |
| R245fa | CHF2CH2CF3 | 134.05 | 15.1 |

In addition to the refrigerants listed in Table 1 above, refrigerants prepared by mixing these refrigerants may be used, with separate refrigerant numbers (R400 and R500) assigned thereto. These HFC/FC mixed refrigerants are listed in Table 2 below.

**Table 2**

| Refrigerant No. | Chemical Formula (mass ratio) | Mole. weight | Boiling Point (NBP)(°C) |
|---|---|---|---|
| R410A | R32/125(50/50) | 72.58 | -51.6 |
| R410B | R32/125(45/55) | 75.57 | -51.5 |
| R507 | R125/143a(50/50) | 98.86 | -47.1 |
| R407B | R32/125/134a(10/70/20) | 102.94 | -46.8 |
| R404A | R125/143a/134a(44/52/4) | 97.6 | -46.6 |
| R407A | R32/125/134a(20/40/40) | 90.11 | -45.2 |
| R407C | R32/125/134a(23/25/52) | 86.2 | -43.8 |
| R407E | R32/125/134a(25/15/60) | 83.78 | -42.8 |
| R407D | R32/125/134a(15/15/70) | 90.96 | -39.4 |

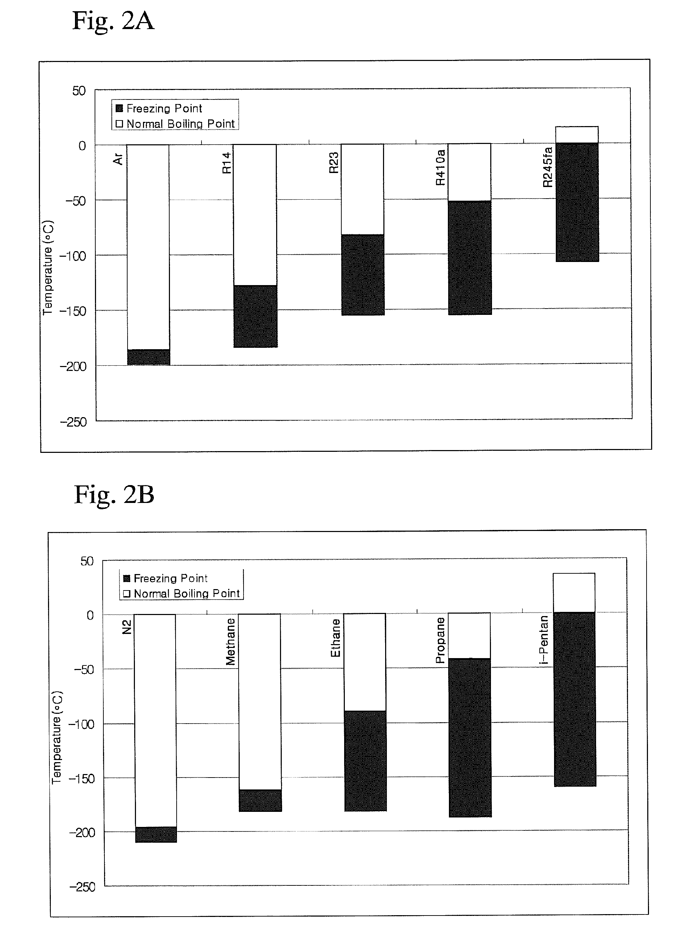

On the other hand, as illustrated in FIGS. 2A and 2B, the HFC/FC refrigerants may not be used as a refrigerant when LNG is reliquefied, because the freezing points of the HFC/FC refrigerants are higher than a general temperature (-163 °C). However, as illustrated in FIG. 2C, the inventors of the present patent application developed a reliquefaction apparatus that could reliquefy BOG generated in an LNG storage tank of a marine structure by a high-efficiency, safe HFC/FC mixed refrigerant (i.e., nonflammable mixed refrigerant) Joule-Thomson refrigeration cycle, based on the knowledge that the liquefaction (or reliquefaction) temperature increases as the pressure of natural gas (or BOG) increases. In other words, according to the present invention, by compressing BOG to a medium pressure of about 12 to 45 bara before reliquefaction, the BOG can be reliquefied at a temperature higher than the reliquefaction temperature of the BOG at ambient pressure, that is, the freezing point of the nonflammable mixed refrigerant.

The nonflammable mixed refrigerant according to the present invention is prepared by mixing a variety of components, such that the boiling points are equally distributed between the liquefaction temperature of the natural gas (or the reliquefaction temperature of the BOG) and room temperature and thus a wide phase change range can be used. Refrigerants having similar boiling points are classified into five groups, and the nonflammable mixed refrigerant according to the present invention may be prepared by selecting one or more components from each group. That is, the nonflammable mixed refrigerant according to the present invention may be prepared by selecting at least one component from each of the five groups.

As illustrated in FIG. 3, the group I includes argon (Ar) having the lowest boiling point among the refrigerants, and the group II includes R14. The group III includes R23, R116, and R41, and the group IV includes R32, R410A, R410B, R125, R143a, R507, R407B, R404A, R407A, R407C, R407E, R407D, R161, R218, R134a, R152a, and R227ea. The group V includes R236fa and R245fa.

When considering the easy supply of refrigerants and the costs thereof, the nonflammable mixed refrigerant according to the present invention, which is prepared by selecting one or more refrigerants from each of the five groups, may have components as shown in Table 4 below. It is preferable in terms of efficiency to determine the composition ratio of the nonflammable mixed refrigerant such that a difference in temperature between a high-temperature fluid (i.e., BOG) and a low-temperature fluid (i.e., the nonflammable mixed refrigerant) in the heat exchanger (i.e., the cold box 21) exchanging heat with the BOG is maintained as constantly as possible.

**Table 3**

| Component | Composition (% mole) |
|---|---|
| Ar | 20 to 55 |
| R14 | 15 to 30 |
| R23 | 5 to 15 |
| R410a | 10 to 15 |
| R245fa | 15 to 20 |

In the case where the nonflammable mixed refrigerant is used, power consumption (kW) can be reduced to improve the reliquefaction efficiency, as compared to the related art in which BOG is reliquefied using the nitrogen refrigerant.

More specifically, according to the present invention, the BOG reliquefaction is achieved by compressing BOG at a medium pressure of about 12 to 45 bara, which is relatively higher than the BOG reliquefaction pressure used in the conventional reliquefaction apparatus. Therefore, power consumption for the BOG reliquefaction can be reduced. Herein, the pressure range according to the present invention (i.e., 12 to 45 bara) is determined by the characteristics of a nonflammable mixed refrigerant with the above-mentioned composition, which is used as a refrigerant in a reliquefaction apparatus. That is, in the case where the nonflammable mixed refrigerant having the above-mentioned composition is used, the reliquefaction apparatus can maintain the highest efficiency when BOG has a pressure of about 12 to 45 bara.

Also, when the pressure of BOG is 12 bara, the reliquefaction temperature is about -130 °C. In order to cool the BOG to the reliquefaction temperature, the temperature of the nonflammable mixed refrigerant is lowered to about -155 °C. The nonflammable mixed refrigerant having the above-mentioned composition may be frozen at a temperature of below -155 °C. Thus, if the pressure of the BOG is lower than 12 bara, it may be difficult to configure the refrigeration cycle using the nonflammable mixed refrigerant.

Also, a critical pressure of BOG having methane as a main component is about 46 bara. Over the critical pressure, no phase exists and reliquefaction is meaningless. Therefore, it may be preferable that the upper limit of the temperature of BOG is set to about 45 bara.

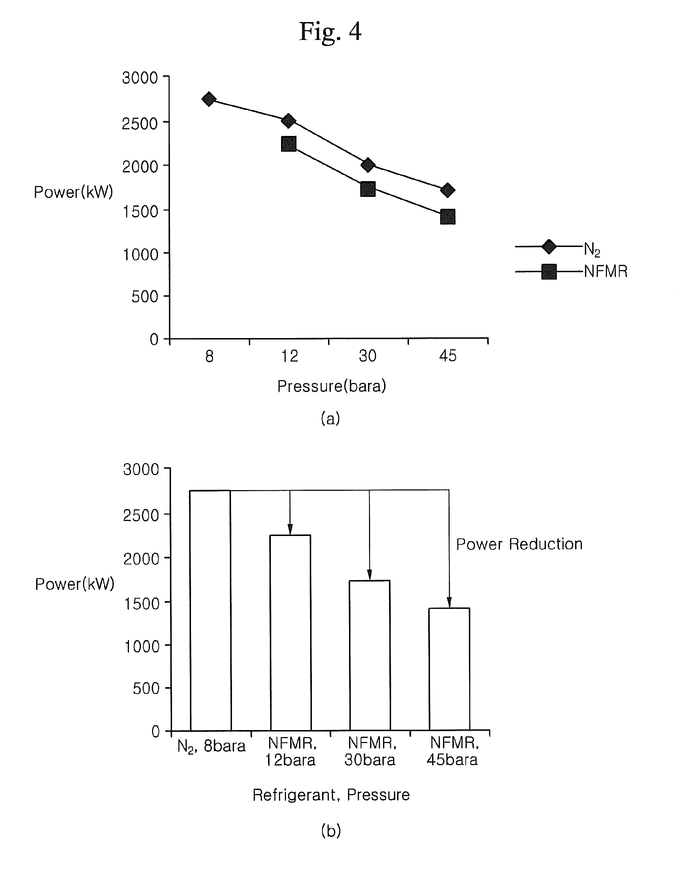

Referring to FIG. 4A, since the present invention is characterized by the medium pressure, that is, the pressure range of about 12 to 45 bara (based on 4.3 ton/h of BOG). As compared to the reliquefaction apparatus using the nitrogen refrigerant, the reliquefaction apparatus using the nonflammable mixed refrigerant having the above-mentioned composition according to the present invention can further reduce power by about 10 to 20%.

FIG. 4B is a graph illustrating comparison of required power in the condition of the conventional reliquefaction apparatus (that is, in the case where the refrigerant used in the reliquefaction apparatus is nitrogen gas (N₂) and the pressure of BOG supplied to the reliquefaction apparatus is 8 bara) and required power in the condition of the reliquefaction apparatus using the nonflammable mixed refrigerant (NFMR) according to the present invention (that is, in the case where the refrigerant used in the reliquefaction apparatus is the nonflammable mixed refrigerant (NFMR) and the pressure of the BOG supplied to the reliquefaction apparatus is 12 to 45 bara). Referring to FIG. 4B, the reliquefaction apparatus according to the present invention can be operated with 50 to 80% of power consumed in the conventional reliquefaction apparatus (refrigeration cycle) using the nitrogen refrigerant. As such, since the reliquefaction apparatus according to the present invention can be operated with relatively low power as compared to the related art, the capacity of a power generator can be reduced, making it possible to miniaturize the power generator.

Meanwhile, the reliquefaction apparatus according to the present invention uses the Joule-Thomson valve as a refrigerant expansion unit, the entire system is simplified and cost-effective, as compared to a conventional nitrogen (N₂) compander.

Moreover, although not listed in Table 1 above, the nonflammable mixed refrigerant according to the present invention may contain a slight amount of nonflammable refrigerant components other than the components listed in Table 2 above.

The BOG reliquefied through heat exchange in the cold box 21 is separated into a gaseous state and a liquid state in a buffer tank 31. Only the liquefied BOG of a liquid state is supplied to the high-pressure pump 33 through a fuel supply line L3. A plurality of high-pressure pump 33 (for example, two high-pressure pumps) may be installed in parallel.

The high-pressure pump 33 compresses the liquefied BOG to a fuel supply pressure required in the high-pressure natural gas injection engine (e.g., an ME-GI engine). The liquefied BOG supplied from the high-pressure pump 33 has a high pressure of about 150 to 400 bara (absolute pressure).

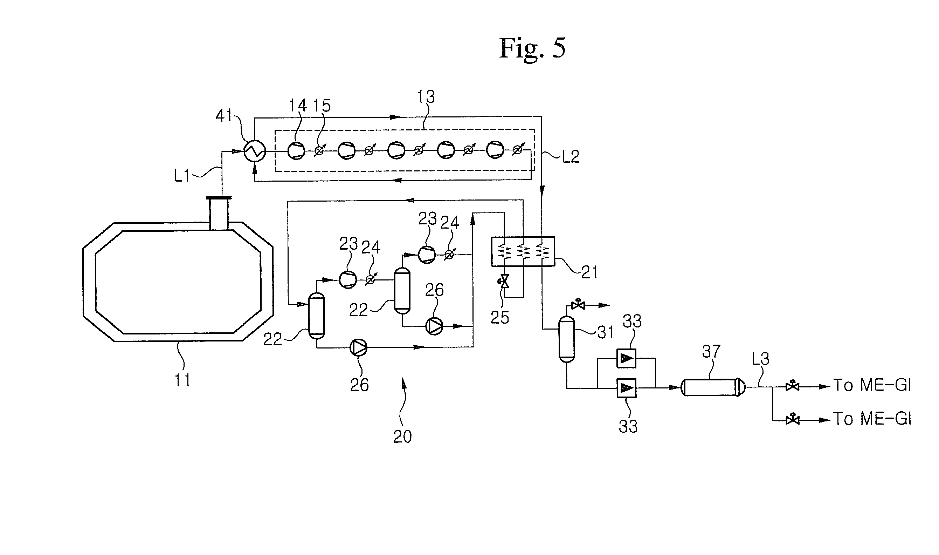

FIG. 5 is a configuration diagram illustrating a fuel supply system for a marine structure (e.g., an LNG carrier) having a high-pressure natural gas injection engine (e.g., an ME-GI engine) according to a second embodiment of the present invention. The second embodiment illustrated in FIG. 5 is different from the first embodiment only in that the fuel supply system preheats BOG before compression. Thus, the following description will be focused on the difference from the first embodiment.

In the fuel supply system for a marine structure having a high-pressure natural gas injection engine according to the second embodiment of the present invention, natural boil-off gas (NBOG) generated and discharged from a liquefied gas storage tank 11 is compressed by a BOG compression unit 13 to a medium pressure of about 12 to 45 bara. The compressed BOG is supplied to a BOG preheater 41 installed at the upstream side of a BOG compression unit 13, before supply to a reliquefaction apparatus 20. The BOG compressed by the BOG compression unit 13 to about 12 to 45 bara and cooled by an intermediate cooler 15 to about 40°C is cooled by heat exchange with cryogenic BOG discharged from the liquefied gas storage tank 11 to the BOG preheater 41, and then is supplied to the reliquefaction apparatus 20.

According to the second embodiment, the temperature of the BOG to be supplied to the reliquefaction apparatus 20 can be reduced through the BOG preheater 41, so that a heat load on the cold box 21 can be reduced. Also, the cryogenic BOG supplied to the BOG compression unit 13 and the higher-temperature BOG compressed by the BOG compression unit 13 exchange heat with each other in the BOG preheater 41 located at the upstream side of the BOG compression unit 13, so that the temperature of the BOG supplied to the BOG compression unit can be increased and the inlet temperature of the BOG compression unit (i.e., the BOG compressor) can be maintained constant.

As in the fuel supply system according to the first embodiment, BOG compressed by the BOG compression unit 13 and then passing through the BOG preheater 41 is supplied to the reliquefaction apparatus 20. Liquefied BOG (LBOG) reliquefied by liquefaction energy (i.e., cold heat) in the reliquefaction apparatus 20 is compressed by a high-pressure pump 33 to a high pressure of about 150 to 400 bara and then is supplied to a high-pressure gasifier 37. BOG gasified by the high-pressure gasifier 37 is supplied as fuel to a high-pressure natural gas injection engine (e.g., an ME-GI engine).

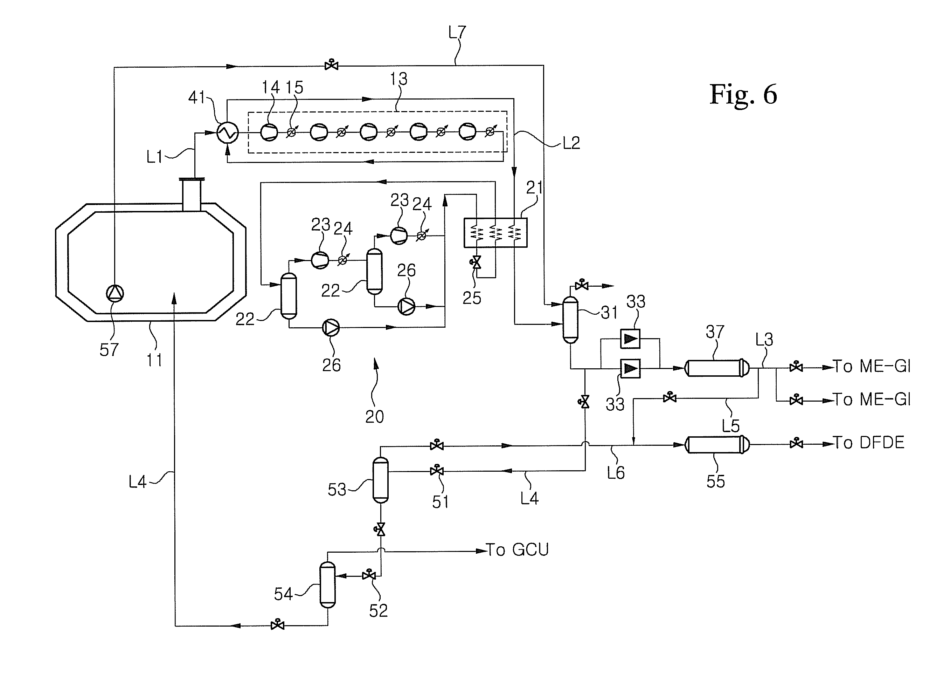

FIG. 6 is a configuration diagram illustrating a fuel supply system for a marine structure having a high-pressure natural gas injection engine (e.g., an ME-GI engine) according to a third embodiment of the present invention. The third embodiment illustrated in FIG. 6 is different from the third embodiment in that the fuel system further includes an excess BOG consumption unit (e.g., a Dual-Fuel Diesel Engine (DFDE)) configured to process excess BOG and a stable fuel supply unit (e.g., an LNG supply line). Thus, the following description will be focused on the difference from the third embodiment.

In the fuel supply system for a marine structure having a high-pressure natural gas injection engine according to the third embodiment of the present invention, when a load on the high-pressure natural gas injection engine decreases, or when an excess amount of BOG is generated, excess LBOG is decompressed through an LBOG expansion valve 51 installed at an LBOG return line L4 branching at a rear end of a buffer tank 31 from a fuel supply line L3. LBOG including flash gas generated in the decompression process is separated by a gas-liquid separator into a liquid component (LBOG) and a gaseous component (flash gas), and the liquid component is returned through the LBOG return line L4 to a storage tank 11.

Specifically, the LBOG decompressed through the LBOG expansion valve and including flash gas is supplied to a gas-liquid LBOG separator 53 and divided by the gas-liquid LBOG separator 53 into a liquid component and a gaseous component. The gaseous component (i.e., flash gas) separated by the gas-liquid LBOG separator 53 is supplied as fuel through a fuel gas supply line L6 to an excess BOG consumption unit (e.g., a DFDE) that may be installed in the marine structure for power generation. The pressure of fuel gas supplied to the DFDE may be controlled by a pressure control valve that is installed at the downstream side of the gas-liquid LBOG separator 53 in the middle of the fuel gas supply line L6. Also, by a fuel gas heater 55 installed in the middle of the fuel gas supply line L6, the temperature of the fuel gas may be heated up to a temperature required by the DFDE. The liquid component separated by the gas-liquid LBOG separator 53 is returned through the LBOG return line L4 to the storage tank.

Since the fuel gas supply pressure of the DFDE is generally about 5 to 8 bara, the pressure of the liquid component separated by the gas-liquid LBOG separator 53 may still be higher than ambient pressure. In this case, the liquid component (i.e., LBOG) separated by the gas-liquid LBOG separator 53 is additionally decompressed through another LBOG expansion valve 52. The decompressed liquid component is supplied to another gas-liquid LBOG separator 54 and separated by the gas-liquid LBOG separator 54 into a liquid component (LBOG) and a gaseous component (flash gas). The ambient-pressure liquid component separated by the gas-liquid LBOG separator 54 is returned through the LBOG return line L4 to the storage tank 11. The gaseous component separated by the gas-liquid LBOG separator 54 may be supplied to and consumed by a gas combustion unit (GCU) serving as another excess BOG consumption unit.

On the other hand, when insufficient fuel is supplied to the DFDE, additional fuel may be supplied to the DFDE through a branch line L5 that branches from the fuel supply line L3 supplying fuel to the high-pressure natural gas injection engine (e.g., ME-GI engine) and connects with the fuel gas supply line L6 supplying fuel to the DFDE. A pressure drop valve is installed at the branch line L5.

Also, when the BOG reliquefaction apparatus does not operate or when a small amount of BOG is generated in the storage tank 11, LNG stored in the storage tank 11 may be supplied to the buffer tank 31 through an LNG supply line L7 and an LNG supply pump 57 installed in the storage tank 11.

In this manner, the DFDE functions as a flash gas processing unit that can process flash gas that may be generated from LBOG in the process of returning to the storage tank 11 due to a pressure difference.

Although not illustrated in the drawings, the gaseous component separated by the gas-liquid LBOG separator 53 may be supplied and used as fuel for a consumption unit such as a gas turbine or a boiler, instead of the DFDE. Also, the gaseous component may be supplied to and processed by a gas discharge device discharging natural gas into the atmosphere or a gas combustion device (e.g., a flare tower) combusting natural gas in the atmosphere. In this case, the DFDE, the gas turbine, the boiler, the gas discharge device, or the flare tower may be included in the excess BOG consumption unit (or the flash gas processing unit), and the gaseous component supplied to the excess BOG consumption unit may be heated by the fuel gas heater 55.

When the BOG compressed by the BOG compression unit 13 to a medium pressure of about 12 to 45 bara and then liquefied by the reliquefaction apparatus 20 is not completely consumed by the high-pressure natural gas injection engine such as an ME-GI engine, the medium-pressure liquefied BOG needs to be returned to the storage tank 11. Since the storage tank 11 is in the state of ambient pressure, the pressure of the liquefied BOG needs to be reduced before the liquefied BOG is supplied to the storage tank. However, flash gas is generated in the process of reducing the pressure. Therefore, the inventors of the present invention invented the fuel supply system including the excess BOG consumption unit capable of processing flash gas. The present invention provides the fuel supply system including the excess BOG consumption unit capable of processing flash gas. Therefore, the BOG compressed to a medium pressure of about 12 to 45 bara can be supplied to the reliquefaction apparatus. Accordingly, the energy consumption in reliquefaction can be reduced.

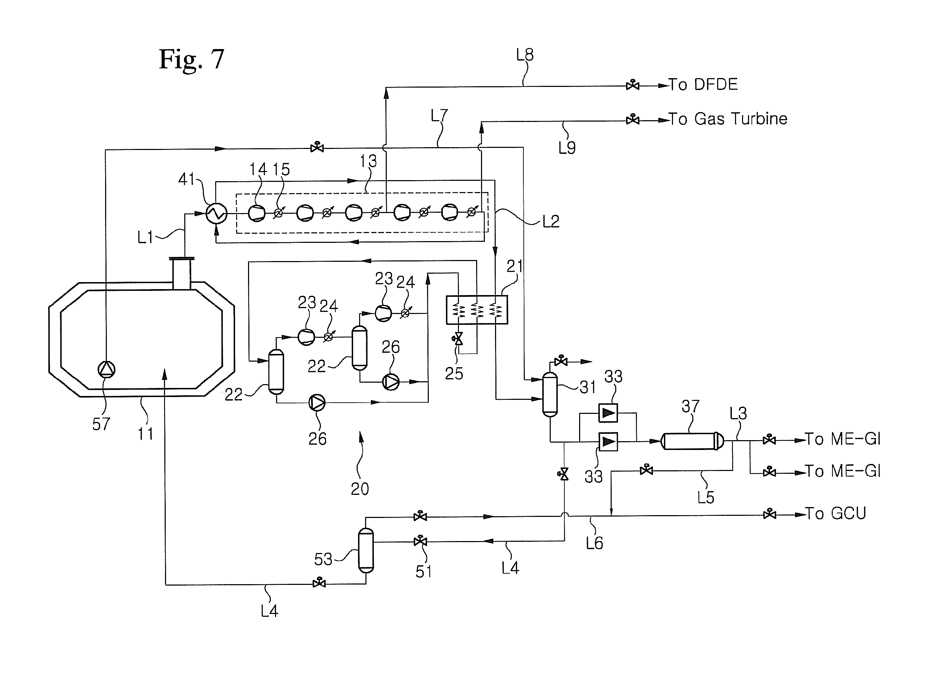

FIG. 7 is a configuration diagram illustrating a fuel supply system for a marine structure having a high-pressure natural gas injection engine (e.g., an ME-GI engine) according to a fourth embodiment of the present invention. The fourth embodiment illustrated in FIG. 7 is different from the third embodiment in that the fuel supply system further includes an excess BOG consumption unit (e.g., a GCU) configured to consume excess BOG and a stable fuel supply unit (e.g., an LNG supply line). Also, the fourth embodiment is different from the third embodiment in that the fuel supply system includes a unit (e.g., a DFDE) configured to branch and consume a portion of BOG before reliquefaction to prevent the generation of excess BOG. Thus, the following description will be focused on the difference from the third embodiment.

In the fuel supply system for a marine structure having a high-pressure natural gas injection engine according to the fourth embodiment of the present invention, when a load on the high-pressure natural gas injection engine decreases, or when an excess amount of LBOG is expected to be generated due to the generation of a large amount of BOG, BOG compressed or being compressed by a BOG compression unit 13 is shunted through a branch line to an excess BOG consumption unit.

That is, the excess BOG may be supplied to a DFDE serving as an excess BOG consumption unit, through a second branch line L8 branching in the middle of the BOG compression unit 13. In this case, since the BOG is cooled to about 40°C by an intermediate cooler 15 included in the BOG compression unit 13, a separate heater configured to control the temperature of BOG supplied to the DFDE may be omitted.

Alternatively, the excess BOG may be supplied to a gas turbine serving as another excess BOG consumption unit, through a third branch line L9 branching from a rear end of the BOG compression unit 13. Likewise, in this case, a separate unit configured to control the temperature of BOG supplied to the gas turbine may be omitted.

On the other hand, even when the amount of BOG supplied to a reliquefaction apparatus 20 is reduced, if the amount of BOG supplied as fuel is more than the amount of BOG required by the high-pressure natural gas injection unit, the excess BOG is processed in the same manner as in the fourth embodiment.

That is, the excess LBOG is decompressed through an LBOG expansion valve 51 installed at an LBOG return line L4 branching at a rear end of a buffer tank 31 from a fuel supply line L3. LBOG including flash gas generated in the decompression process is separated by a gas-liquid LBOG separator 53 into a liquid component (LBOG) and a gaseous component (flash gas), and the liquid component is returned through the LBOG return line L4 to a storage tank 11. The gaseous component (i.e., flash gas) separated by the gas-liquid LBOG separator 53 is supplied as fuel through a fuel gas supply line L6 to a GCU.

On the other hand, the excess BOG may be additionally supplied to the GCU through a branch line L5 that branches from the fuel supply line L3 supplying fuel to the high-pressure natural gas injection engine (e.g., ME-GI engine) and connects with the fuel gas supply line L6. A pressure drop valve is installed at the branch line L5.

Also, as in the third embodiment, when the BOG reliquefaction apparatus does not operate or when a small amount of BOG is generated in the storage tank 11, LNG stored in the storage tank 11 may be supplied to the buffer tank 31 through an LNG supply line L7 and an LNG supply pump 57 installed in the storage tank 11.

In the third and fourth embodiments, the DFDE (in the third embodiment) and the GCU (in the fourth embodiment) configured to process generated flash gas, and the DFDE (in the fourth embodiment) and the gas turbine (in the fourth embodiment) configured to consume excess BOG before reliquefaction in order to prevent the generation of flash gas, may be commonly called a flash gas suppression unit because they can suppress the generation of flash gas.

As compared to the conventional fuel supply system, the fuel supply systems for a marine structure having a high-pressure natural gas injection engine according to the first to fourth embodiments have the following advantages.

In general, BOG may be compressed to a high pressure in order to increase the BOG reliquefaction efficiency. However, in a conventional method, BOG is reliquefied by a reliquefaction apparatus and returned to a storage tank, and the LNG stored in the storage tank is maintained at an ambient pressure state. Therefore, if a pressure of the liquefied BOG is excessively high, flash gas may be generated when the BOG is returned to the storage tank. Therefore, the BOG needs to be compressed to a low pressure of about 4 to 8 bara, in spite of low reliquefaction efficiency.

As compared to the convention method, according to the present invention, since the BOG discharged from the storage tank is used as fuel for the high-pressure natural gas injection engine, the BOG can be compressed to a higher pressure and reliquefied without causing the generation of flash gas, thus increasing reliquefaction efficiency.

According to the present invention, since liquefied BOG is supplied as a fuel for a high-pressure natural gas injection engine (e.g., an ME-GI engine), the liquefied BOG need not be returned to the storage tank for re-storage in the storage tank, thus making it possible to prevent the generation of flash gas that may be caused when the BOG is returned to the storage tank. Also, since the generation of flash gas is suppressed, the BOG can be compressed to a higher pressure (i.e., a medium pressure of about 12 to 45 bara) for reliquefaction as compared to the conventional method. Since the BOG is compressed to a medium pressure and then reliquefied, reliquefaction efficiency can be improved regardless of the types of refrigerant. In particular, reliquefaction efficiency can be increased when a nonflammable mixed refrigerant is used instead of a nitrogen refrigerant. That is, as compared to the conventional reliquefaction apparatus using a nitrogen refrigerant, the reliquefaction apparatus using a nonflammable mixed refrigerant according to the present invention can reliquefy the BOG by considerably low energy and supply the liquefied BOG as fuel for the engine.

It has been described above that that the fuel supply system and method of the present invention are applied to a marine structure such as an LNG carrier. However, it will be readily understood that the fuel supply system and method of the present invention are also applicable to fuel supply to a high-pressure natural gas injection engine on land.

While the embodiments of the present invention has been described with reference to the specific embodiments, it will be apparent to those skilled in the art that various changes and modifications may be made without departing from the spirit and scope of the invention as defined in the following claims.

## Claims

1. A nonflammable mixed refrigerant for use in a fuel supply system for a high-pressure natural gas injection engine, **characterized in that**:
the fuel supply system includes a boil-off gas (BOG) compression unit configured to receive and compress BOG generated in a storage tank storing liquefied gas, a reliquefaction apparatus configured to receive and liquefy the BOG compressed by the BOG compression unit, a high-pressure pump configured to compress the liquefied BOG generated by the reliquefaction apparatus, and a high-pressure gasifier configured to gasify the liquefied BOG compressed by the high-pressure pump and supply the gasified BOG to the high-pressure natural gas injection engine,
the nonflammable mixed refrigerant cooling the BOG by heat exchange with the BOG in the reliquefaction apparatus comprises a mixture of nonflammable refrigerants with different boiling points, and the boiling point of each of the nonflammable refrigerant ranges between a room temperature and a liquefaction temperature of natural gas.

2. The nonflammable mixed refrigerant according to claim 1, wherein when group I includes argon (Ar), group II includes R14, group III includes R23, R116, and R41, group IV includes R32, R410A, R410B, R125, R143a, R507, R407B, R404A, R407A, R407C, R407E, R407D, R161, R218, R134a, R152a, and R227ea, and group V includes R236fa and R245fa, the nonflammable mixed refrigerant comprises a mixture of one or more refrigerants selected from the group I, one or more refrigerants selected from the group II, one or more refrigerants selected from the group III, one or more refrigerants selected from the group IV, and one or more refrigerants selected from the group V

3. The nonflammable mixed refrigerant according to claim 1, wherein a composition ratio of the nonflammable refrigerants is determined to constantly maintain a temperature difference between a high-temperature fluid and a low-temperature fluid in a heat exchanger performing heat exchange between the nonflammable mixed refrigerant and the BOG.

4. The nonflammable mixed refrigerant according to claim 1, wherein the nonflammable mixed refrigerant comprises a mixture of Ar, R14, R23, R410a, and R245fa.

5. The nonflammable mixed refrigerant according to claim 1, wherein the nonflammable mixed refrigerant has a freezing point of a temperature that does not cause the BOG to be frozen even when the BOG is generated in the storage tank, discharged from the storage tank, compressed to a pressure of about 12 to 45 bara in the BOG compression unit, and then reliquefied by heat exchange with the nonflammable mixed refrigerant.

6. A nonflammable mixed refrigerant used to liquefy natural gas, **characterized in that**:
the nonflammable mixed refrigerant reliquefying boil-off gas (BOG) by heat exchange with the BOG that is generated in and discharged from a liquefied natural gas (LNG) storage tank; and
the nonflammable mixed refrigerant has a freezing point of a temperature that does not cause the BOG to be frozen even when the BOG is generated in the LNG storage tank, discharged from the LNG storage tank, compressed to a pressure of about 12 to 45 bara in a compression unit, and then reliquefied by heat exchange with the nonflammable mixed refrigerant.

7. A nonflammable mixed refrigerant used to liquefy natural gas, **characterized in that**:
the nonflammable mixed refrigerant reliquefying natural gas by heat exchange with the natural gas in a heat exchanger comprises a mixture of nonflammable refrigerants with different boiling points, and the boiling point of each of the nonflammable refrigerant ranges between a room temperature and a liquefaction temperature of natural gas.
